# EUROPÄISCHE PATENTANMELDUNG

(11) **EP 3 431 279 A1**
(43) Veröffentlichungstag der Anmeldung: **23.01.2019**
(21) Anmeldenummer: 18000598.5
(22) Anmeldetag: 13.07.2018
(51) Int. Cl.: B32B 5/16, B32B 5/22, B32B 5/30, B32B 7/12, B32B 25/00, B32B 25/04, B32B 37/12, B32B 3/00, B32B 3/18, B32B 37/18, E04B 1/86, E04B 9/04

(54) **GUMMI-MATTE UND VERFAHREN ZU IHRER HERSTELLUNG**

(30) Priorität: 19.07.2017 DE 102017006796
(71) Anmelder: Elgenmann, Werner, 8309 Oberwil (CH)
(72) Erfinder: Eigenmann, Werner, 8309 Oberwil (CH)
(74) Vertreter: Lichti - Patentanwälte Partnerschaft mbB

(57) **Zusammenfassung**

Eine Gummi-Matte aus recyceltem Material besitzt eine Tragschicht und eine Dämmschicht. Die Tragschicht besteht zumindest überwiegend und vorzugsweise vollständig aus einem recycelten, de-vulkanisierten und anschließend re-vulkanisierten 1. Gummi-Material. Die Dämmschicht besteht zumindest überwiegend und vorzugsweise vollständig aus einem recycelten, mit einem Schmelzkleber versetzten 2. Gummi-Material. Zur Herstellung der Gummi-Matte wird ein 1. Gummi-Re-cyclingmaterial zerkleinert und de-vulkanisiert und anschließend zu einem Band ausgeformt. Anschließend wird auf das Band eine Schicht aus einem 2. Gummi-Recyclingmaterial, das mit einem Schmelzkleber in Pulverform durchmischt ist, aufgestreut. Das Band mit der aufgestreuten Schicht wird durch eine beheizte Presse geführt und dort unter Einwirkung von Druck und Wärme und unter Aktivierung des Schmelzklebers komprimiert.

## Beschreibung

Die Erfindung betrifft eine Gummi-Matte aus einem recycelten Gummi-Material. Darüber hinaus betrifft die Erfindung ein Verfahren zur Herstellung einer entsprechenden Gummi-Matte.

Aufgrund der zunehmenden Zahl von Kraftfahrzeugen fällt jährlich eine sehr große Menge an Altreifen an, die auf natürlichem Wege nicht verrotten und deshalb entsorgt werden müssten. Seit vielen Jahren gibt es Bemühungen, das in den Altreifen befindliche Gummi-Material weiterzuverwenden. Es ist bekannt, die Altreifen zu zerkleinern bzw. zu granulieren und die im Altreifen befindlichen Bestandteile aus Stahl und Textilfaser herauszusortieren. Es verbleibt ein Gummigranulat, das unter Hinzufügung von Bindemitteln beispielsweise in eine Strangform gepresst und dann in Stücke gewünschter Größe geschnitten werden kann, wodurch eine Gummi-Matte gebildet ist. Eine derartige Gummi-Matte besitzt gute Wärme- und Schalldämmeigenschaften, jedoch ist die Stabilität und insbesondere die Abriebfestigkeit relativ gering.

Das bei der Verkleinerung von Altreifen anfallende Gummi-Material ist vulkanisiert und lässt sich nur begrenzt weiterverarbeiten. Es sind verschiedene Verfahren bekannt, das Gummi-Material zu de-vulkanisieren, d.h. in einen Zustand zu bringen, in dem es sich ähnlich wie Natur-Kautschuk verarbeiten lässt. Dieses Vorgehen ist jedoch aufwändig und relativ teuer.

Der Erfindung liegt die Aufgabe zugrunde, eine Gummi-Matte aus recyceltem Gummi-Material zu schaffen, die sowohl eine hohe Festigkeit als auch gute Dämmungseigenschaften insbesondere in Hinsicht der Schalldämmung und der Wärmedämmung besitzt.

Darüber hinaus soll ein Verfahren geschaffen werden, mit dem sich eine entsprechende Gummi-Matte in einfacher und kostengünstiger Weise herstellen lässt.

Die vorgenannte Aufgabe wird erfindungsgemäß durch eine Gummi-Matte mit den Merkmalen des Anspruchs 1 gelöst. Dabei sind eine Tragschicht und eine Dämmschicht vorgesehen, wobei die Tragschicht zumindest überwiegend und vorzugsweise vollständig aus einem recycelten de-vulkanisierten und re-vulkanisierten 1. Gummi-Material besteht und wobei die Dämmschicht zumindest überwiegend und vorzugsweise vollständig aus einem recycelten, mit einem Schmelzkleber versetzten 2. Gummi-Material besteht.

Erfindungsgemäß wird von der Grundüberlegung ausgegangen, die Gummi-Matte überwiegend oder vorzugsweise vollständig aus recyceltem Gummi-Material aufzubauen, jedoch zwei unterschiedliche Schichten vorzusehen, die unterschiedliche Funktionen aufweisen. Die Tragschicht aus dem 1. Gummi-Material besitzt eine hohe Reißfestigkeit und Stabilität und ist darüber hinaus relativ hart (vorzugsweise mit einer Shore A-Härte von 55 +/- 5) und witterungsbeständig. Das 1. Gummi-Material wird dadurch gewonnen, dass Kfz-Reifen und insbesondere LKW-Reifen zerkleinert und dann de-vulkanisiert werden. Bei der Herstellung der Gummi-Matte wird dieses 1. Gummi-Material durch Aufbringung von Wärme und Druck wieder vulkanisiert (re-vulkanisiert), wodurch es die hohe Stabilität erhält.

Da das die Tragschicht bildende 1. Gummi-Material relativ aufwändig in der Herstellung ist, besitzt die Tragschicht vorzugsweise eine geringere Stärke als die auf ihr befindliche Dämmschicht. Es hat sich als ausreichend erwiesen, wenn die Tragschicht eine Stärke von 1,0mm bis 2,0mm und insbesondere von 1,2mm bis 2,0mm besitzt.

Das die Dämmschicht bildende 2. Gummi-Material wird vorzugsweise ebenfalls aus Altreifen von Kraftfahrzeugen und insbesondere aus Altreifen von LKWs gewonnen, die in bekannter Weise zerkleinert werden. Das auf diese Weise gewonnene Granulat kann mit einem pulverförmigen Schmelzkleber, insbesondere einem Copolyster-Schmelzkleber durchmischt werden, der bei seiner Aktivierung durch Wärmeaufbringung dafür sorgt, dass die Granulatteilchen fest miteinander verbunden sind. Die Dämmschicht weist vorzugweise eine Stärke von 1,0mm bis 20,0mm auf.

Eine entsprechende Gummi-Matte kann beispielsweise als Fußbodenbelag verwendet werden, wobei die Tragschicht nach oben weist, d.h. der Benutzer auf der Tragschicht entlangläuft. Die darunterliegende Dämmschicht gewährleistet eine gute Schall- und Wärmeisolation. Ein entsprechender Bodenbelag kann beispielsweise in Wohngebäuden von Menschen oder auch in Tierställen verwendet werden.

Eine alternative Einsatzmöglichkeit besteht in der Verwendung als Schutzmatte insbesondere an Wänden von Parkhäusern für Kraftfahrzeuge.

Hinsichtlich des Verfahrens wird die obenstehende Aufgabe dadurch gelöst, dass ein 1. Gummi-Recyclingmaterial zerkleinert und de-vulkanisiert und anschließend zu einem Band ausgeformt und insbesondere ausgewalzt wird, wobei anschießend auf das Band eine Schicht aus einem 2. Gummi-Recyclingmaterial, das mit einem Schmelzkleber in Pulverform durchmischt ist, aufgestreut wird, wobei anschließend das Band mit der aufgestreuten Schicht durch eine beheizte Presse geführt und dort unter Einwirkung von Druck und Wärme und unter Aktivierung des Schmelzklebers komprimiert wird und wobei der aus der Presse austretende Strang anschließend konfektioniert wird.

Im folgenden wird das Verfahren in den einzelnen Phasen erläutert, wobei beispielshaft davon ausgegangen wird, dass das Recyclingmaterial aus LKW-Altreifen gewonnen wird. Es ist jedoch auch möglich, andere gebrauchte Gummi-Bauteile für die Gewinnung des Recycling-Materials zu verwenden.

Zur Gewinnung des 1. Gummi-Recyclingmaterials werden Kfz-Reifen und insbesondere LKW-Reifen zerkleinert, wobei das dabei gewonnene Granulat beispielsweise eine Körnchengröße von 1mm bis 3mm aufweist. Eventuelle Fremdkörper, beispielsweise Bestandteile aus Stahl oder Textilfaser werden entfernt. Das 1. Gummi-Recyclingmaterial wird dann mittels eines bekannten Verfahrens de-vulkanisiert und beispielsweise mittels einer Kalanderpresse zu einem dünnen Band ausgewalzt, wobei das Band vorzugsweise eine Stärke von 1,0mm bis 3,0mm und insbesondere eine Stärke von 1,2mm bis 2,0mm besitzt.

Auch das 2. Gummi-Recyclingmaterial besteht vorzugsweise zumindest überwiegend oder sogar vollständig aus zerkleinerten Kfz-Reifen und insbesondere aus LKW-Reifen. Die Reifen werden zerkleinert und eventuelle Fremdköper, beispielsweise Bestandteile aus Stahl oder Textilfasern werden entfernt. Das auf diese Weise gewonnene Gummigranulat weist vorzugweise eine Körnchengröße von <1mm und insbesondere eine Körnchengröße im Bereich von 0,4mm bis 0,8mm auf. Dieses Gummigranulat wird dann mit einem Schmelzkleber in Pulverform, insbesondere einem Copolyester-Schmelzkleber sorgfältig durchmischt.

Das Band aus dem 1. Gummi-Recyclingmaterial wird auf einer Fördervorrichtung einer Presse zugeführt. Stromauf der Presse, d.h. bevor das Band in die Presse eintritt, wird die Schicht aus dem 2. Gummi-Recyclingmaterial auf das Band aufgestreut. Vorzugsweise ist dabei durch seitliche Begrenzungen verhindert, dass das 2. Gummi-Recyclingmaterial von dem Band des 1. Gummi-Recyclingmaterials herabfallen kann. Die aufgestreute Schicht aus dem 2. Gummi-Recyclingmaterial besitzt vorzugsweise eine Stärke von 1,0mm bis 30,0mm und wird insbesondere so aufgebracht, dass das Band vorzugsweise vollständig überdeckt ist.

Das Band aus dem 1. Gummi-Recyclingmaterial mit der aufgestreuten Schicht aus dem 2. Gummi-Recyclingmaterial einschließlich des eingemischten Schmelzklebers tritt dann in die Presse ein. Die Presse ist beheizt auf eine Temperatur vorzugsweise im Bereich von 160°C bis 200°C und insbesondere im Bereich von 180°C. Durch die Einwirkung der Wärme der Presse wird der Schmelzkleber aktiviert, wodurch die Granulatkörnchen des 2. Gummi-Recyclingmaterials miteinander verbunden werden. Darüber hinaus wird das 1. Gummi-Recyclingmaterial durch die Temperatur vulkanisiert. Infolge des durch die Presse ausgeübten Drucks werden die Bahn aus dem 1. Gummi-Recyclingmaterial und die Schicht aus dem 2. Gummi-Recyclingmaterial komprimiert und fest miteinander verbunden.

Der aus der Presse austretende Strang wird anschließend konfektioniert, d.h. in Teilstücke gewünschter Größe zerschnitten. Dabei kann vorgesehen sein, dass der aus der Presse austretende Strang vor dem Konfektionieren gekühlt wird. Vorzugsweise erfolgt eine Abkühlung auf eine Temperatur, die im Bereich von 10°C und somit geringfügig unterhalb der üblichen Umgebungstemperatur liegt.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: einen schematischen Querschnitt durch eine erfindungsgemäße Gummi-Matte und
- Fig. 2: eine schematische Darstellung einer Vorrichtung zur Durchführung des Verfahrens.

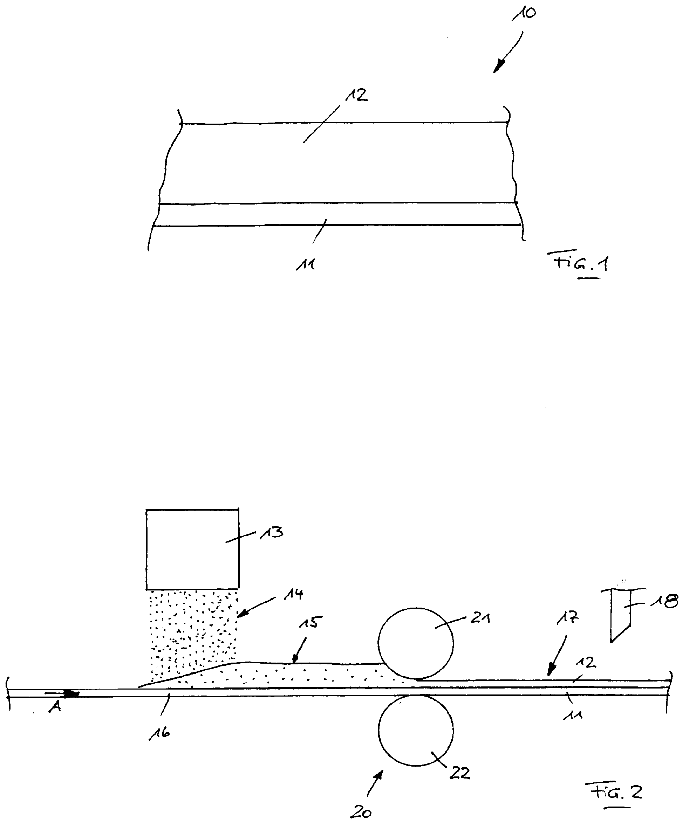

Eine in Figur 1 dargestellte Gummi-Matte 10 besitzt eine Tragschicht 11, die eine hohe Stabilität besitzt, und eine gegenüber der Tragschicht 11 vorzugsweise dickere Dämmschicht 12. Die beiden Schichten sind fest miteinander verbunden.

Die Herstellung der Gummi-Matte 10 wird anhand der Figur 2 im folgenden erläutert. Ein Band 16 aus einem 1. Gummi-Recyclingmaterial wird einer Presse 20 zugeführt, wie es in Figur 2 durch den Pfeil A angedeutet ist. Das 1. Gummi-Recyclingmaterial ist aus zerkleinerten und de-vulkanisierten LKW-Reifen gebildet, die zu dem Band 16 ausgewalzt sind. Stromauf der Presse 20, d.h. bevor das Band 16 in die Presse 20 eintritt, wird auf das Band 16 eine Schicht 15 aus einem 2. Gummi-Recyclingmaterial aufgestreut. Das 2. Gummi-Recyclingmaterial 14 besteht aus einem Granulat aus zerkleinerten LKW-Reifen, das mit einem pulverförmigen Schmelzkleber durchmischt ist. Wie Figur 2 zeigt, ist eine Streustation 13 vorgesehen, von der aus das 2. Gummi-Recyclingmaterial 14 zusammen mit dem Schmelzkleber auf die Oberfläche des Bandes 16 fällt und dort die Schicht 15 bildet.

Das Band 16 wird anschließend mit der aufgestreuten Schicht 15 durch die Presse 20, die zumindest ein Walzenpaar 21, 22 aufweist, hindurchgeführt. Die Presse 20 ist auf eine Temperatur von ca. 180°C erwärmt, so dass das Band 16 mit der aufgestreuten Schicht 15 in der Presse unter Einwirkung von Druck und Wärme und unter Aktivierung des Schmelzklebers komprimiert und zu der zwei-schichtigen Gummi-Matte umgeformt wird, die die dünne Tragschicht 11 und eine darüber liegende dickere Dämmschicht 12 aufweist.

Der aus der Presse 20 austretende Strang 17 wird anschließend beispielsweise mittels eines Messers 18 in gewünschte Teilstücke zerschnitten, d.h. konfektioniert.

## Patentansprüche

1. Gummi-Matte mit einer Tragschicht (11) und einer Dämmschicht (12), wobei die Tragschicht (11) zumindest überwiegend aus einem recycelten, de-vulkanisierten und re-vulkanisierten 1. Gummi-Material besteht und wobei die Dämmschicht (12) zumindest überwiegend aus einem recycelten, mit einem Schmelzkleber versetzten 2. Gummi-Material (14) besteht.

2. Gummi-Matte nach Anspruch 1, **dadurch gekennzeichnet, dass** die Tragschicht (11) vollständig aus dem recycelten, de-vulkannisierten und re-vulkanisierten 1. Gummi-Material besteht.

3. Gummi-Matte nach Anspruch 1 oder 2, **dadurch gekennzeichnet, dass** die Dämmschicht (12) vollständig aus dem recycelten, mit einem Schmelzkleber versetzten 2. Gummi-Material (14) besteht.

4. Gummi-Matte nach einem der Ansprüche 1 bis 3, **dadurch gekennzeichnet, dass** die Tragschicht (11) eine Stärke von 1,0mm bis 3,0mm aufweist.

5. Gummi-Matte nach Anspruch 4, **dadurch gekennzeichnet, dass** die Tragschicht (11) eine Stärke von 1,2mm bis 2,0mm aufweist.

6. Gummi-Matte nach einem der Ansprüche 1 bis 5, **dadurch gekennzeichnet, dass** die Dämmschicht (12) eine Stärke von 1,0mm bis 20,0mm aufweist.

7. Verfahren zur Herstellung einer Gummi-Matte insbesondere gemäß einem der Ansprüche 1 bis 6, wobei ein 1. Gummi-Recyclingmaterial zerkleinert und de-vulkanisiert und anschließend zu einem Band (16) ausgewalzt wird, wobei anschließend auf das Band (16) eine Schicht (15) aus einem 2. Gummi-Recyclingmaterial (14), das mit einem Schmelzkleber in Pulverform durchmischt ist, aufgestreut wird, wobei anschließend das Band (16) mit der aufgestreuten Schicht (15) durch eine beheizte Presse (20) geführt und dort unter Einwirkung von Druck und Wärme und unter Aktivierung des Schmelzklebers komprimiert wird und wobei der aus der Presse (20) austretende Strang (17) anschließend konfektioniert wird.

8. Verfahren nach Anspruch 7, **dadurch gekennzeichnet, dass** das 1. Gummi-Recyclingmaterial zumindest überwiegend oder vollständig aus zerkleinerten Kraftfahrzeug-Reifen besteht.

9. Verfahren nach Anspruch 7 oder 8, **dadurch gekennzeichnet, dass** das Band (16) eine Stärke von 1,0mm bis 3,0mm aufweist.

10. Verfahren nach Anspruch 9, **dadurch gekennzeichnet, dass** das Band (16) eine Stärke von 1,2mm bis 2,0mm aufweist.

11. Verfahren nach einem der Ansprüche 7 bis 10, **dadurch gekennzeichnet, dass** das 2. Gummi-Recyclingmaterial (14) zumindest überwiegend oder vollständig aus zerkleinerten Kfz-Reifen besteht.

12. Verfahren nach einem der Ansprüche 7 bis 11, **dadurch gekennzeichnet, dass** der Schmelzkleber ein Copolyester-Schmelzkleber ist.

13. Verfahren nach einem der Ansprüche 7 bis 12, **dadurch gekennzeichnet, dass** die Schicht (15) aus dem 2. Gummi-Recyclingmaterial in einer Stärke von 1,0mm bis 30,0mm auf das Band (16) aufgestreut wird.

14. Verfahren nach einem der Ansprüche 7 bis 13, **dadurch gekennzeichnet, dass** das Band (16) und die ausgestreute Schicht (15) in der Presse (20) bei einer Temperatur im Bereich von 160°C bis 200°C komprimiert werden.

15. Verfahren nach einem der Ansprüche 7 bis 14, **dadurch gekennzeichnet, dass** das das Band (16) bildende 1. Gummi-Recyclingmaterial in der Presse (20) vulkanisiert wird.

16. Verfahren nach einem der Ansprüche 7 bis 15, **dadurch gekennzeichnet, dass** der aus der Presse (20) austretende Strang (17) vor dem Konfektionieren gekühlt wird.
